# EUROPÄISCHE PATENTSCHRIFT

(11) **EP 0 373 403 B1**
(45) Veröffentlichungstag und Bekanntmachung des Hinweises auf die Patenterteilung: **10.03.1993**
(21) Anmeldenummer: 89121710.1
(22) Anmeldetag: 24.11.1989
(51) Int. Cl.: E02F 3/96, E02F 5/30, B23D 35/00

(54) **Trenngerät zum Anbau an hydraulische Arbeitsmaschinen**
Cutting tool to be employed in hydraulic excavators
Dispositif de cisaillement pour engins de terrassement

(30) Priorität: 03.12.1988 DE 8815092 U
(43) Veröffentlichungstag der Anmeldung: 20.06.1990
(73) Patentinhaber: Wack, Helmut, D-66440 Blieskastel (DE)
(72) Erfinder: Wack, Helmut, D-66440 Blieskastel (DE)
(74) Vertreter: Lichti, Heiner, Dipl.-Ing.

(56) Entgegenhaltungen:
- EP-A- 0 154 727
- FR-A- 2 600 354
- US-A- 4 403 431
- US-A- 4 635 386
- US-A- 4 686 767

## Beschreibung

Die Erfindung betrifft ein hydraulisch angetriebenes Trenngerät, das an eine Arbeitsmaschine mit Hochdruck-Hydrauliksystem, z.B. einen Bagger, anschließbar ist und zwei Backen aufweist, von denen einer zwei mit Abstand und parallel nebeneinander angeordnete, leistenförmige Widerlager für das aufzutrennende Gut und der andere ein Trennwerkzeug aufweist, das bei dem Trennvorgang bis zwischen die leistenförmigen Widerlager bewegbar ist, wobei die Wiederlager ein Profil aufweisen.

Trenngeräte des vorgenannten Aufbaus, wie sie in der EP 0 154 727 A1 gezeigt sind, werden in erster Linie für Abbrucharbeiten an Hochbauten, Industrieanlagen etc. eingesetzt. Sie sind zum Anbau an schwere Baumaschinen ausgerüstet, z.B. zum Anbau an den Stiel eines Baggers. Die erheblichen Trennkräfte werden durch einen zwischen den Backen wirksamen Hydraulikzylinder erzeugt, der an das Hochdruck-Hydrauliksystem, gegebenenfalls unter Zwischenschaltung eines Druckübersetzers angeschlossen ist. Das Trenngerät weist in der Regel an seinem einen Backen ein leistenförmiges Scherwerkzeug auf, das beim Trennvorgang zwischen die Widerlager am anderen Backen eintaucht und zuvor beim Vorbeilaufen seiner beiden Scherkanten an den Innenkanten der Widerlager das zwischen den Backen befindliche Material abschert. Die beiden Widerlager weisen dabei auf ihrer dem Scherwerkzeug zugewandten Oberseite ein Profil auf.

Mit diesem bekannten Trenngerät mit Scherwerkzeug lassen sich Beton, Stahlbeton, Mauerwerkzeug, Bauteile aus Stahl etc., einwandfrei zerteilen. Hingegen ist es nicht möglich, Material mit plastischem oder quasi-plastischem Verhalten, z.B. Holz, Holzwerkstoffe, Verbundwerkstoffe mit Holzanteilen etc., aufzutrennen. Bauteile aus diesen Werkstoffen sind aber bei Abbrucharbeiten häufig anzutreffen. Auch besteht Bedarf an einem Trenngerät, das nicht nur im Rahmen von Abbrucharbeiten eingesetzt werden kann, sondern beispielsweise das Zerkleinern von Wurzelstöcken von Bäumen ermöglicht, die, sei es bei Bauarbeiten oder im Forst, aus dem Boden entfernt werden müssen und bis heute nur mit großem Arbeits- und Zeitaufwand mittels Kappsägen od. dgl. zerlegt werden können oder aber auf Deponien verbracht werden, wo ihre deponiergerechte Verarbeitung jedoch gleichfalls erhebliche Schwierigkeiten bereitet. Das Zerteilen von Wurzelstöcken oder Abbruchholz mittels Kappsägen hat im übrigen den Nachteil, daß jede Säge gegen Fremdkörper, wie Steine, Metall od. dgl., empfindlich ist und deshalb schnell verschleißt.

Aus der FR 2 600 354 ist ein Trenngerät bekannt, das an einem Bagger anbaubar ist und zwei gegenüberliegend angeordnete Schneiden aufweist, von denen die eine keilförmig ausgebildet ist, während die andere eine entsprechend geformte Nut aufweist, in die die keilförmige Schneide im geschlossenen Zustand eingreift. Mit einem derartigen Trenngerät ist der Nachteil verbunden, daß das aufzutrennende Gut nur schwierig zu erfassen ist, so daß es häufig in unbeabsichtigter Weise verkantet.

Der Erfindung liegt die Aufgabe zugrunde, ein Trenngerät des eingangs geschilderten Aufbaus so auszubilden, daß auch Bauteile aus Holz, inbesondere aber Wurzelstöcke, zuverlässig ergriffen und zerteilt werden können.

Diese Aufgabe wird erfindungsgemäß dadurch gelöst, daß das Profil an den Widerlagern ein scharfkantiges, beim Trennvorgang in den zwischen den Backen (2,4) eingeschlossenen Raum eindringendes Sägezahnprofil ist, wobei die steile Flanke jedes Zahns dem Schwenklager der Backen zugekehrt ist, daß die leistenförmigen Widerlager auch an den einander zugekehrten Seiten ein Sägezahnprofil aufweisen, daß das Trennwerkzeug als keilförmiges Spaltwerkzeug ausgebildet ist und daß die Backen gegeneinander schwenkbar sind.

Mit der erfindungsgemäßen Ausbildung wird eine Art Spaltgerät geschaffen, das jedoch nicht, wie üblicherweise beim Spalten, parallel zur Faserrichtung des Holzes angesetzt wird, sondern das Holz in jeder beliebigen Richtung zum Faserverlauf, insbesondere auch quer dazu trennt. Insbesondere ist es möglich, Wurzelstöcke mit ihrer völlig irregulären Form in beliebig kleine Teile zu zerlegen, sei es, um sie transport- und handhabungsfähig zu machen, sei es, um die entstehenden Holzteile weiterzuverarbeiten. Das an den Widerlagern des einen Backens angeordnete scharfkantige Profil sorgt dafür, daß beim Zuschwenken der Backen und der dabei eintretenden Verkleinerung des Öffnungswinkels der Backen das aufzutrennende Gut wirksam ergriffen wird und nicht herausrutschen kann. Dabei dringt das Profil in das Holz ein. Gleichzeitig beginnt an der gegenüberliegenden Seite das Spaltwerkzeug in das Holz einzudringen und dieses schließlich über den gesamten Querschnitt aufzutrennen. Durch die Möglichkeit des Anbaus an einen Bagger od.dgl. gibt die Erfindung ferner die Möglichkeit, Wurzelstöcke aus dem Boden zu ziehen und mit der gleichen Arbeitsmaschine mittels des Trenngerätes zu zerlegen. Schließlich ist von Vorteil, daß das erfindungsgemäße Trenngerät gegen Fremdkörper aus härterem Material unempfindlich ist und fast keinem Verschleiß unterliegt.

Ein vorteilhaftes Ausführungsbeispiel der Erfindung zeichnet sich dadurch aus, daß die leistenförmigen Widerlager an ihrem äußeren Ende durch einen Quersteg verbunden sind und daß das Spaltwerkzeug um etwa die Breite des Querstegs kürzer ist als der die Widerlager aufweisende Backen. Mit dem Quersteg bilden die beiden leistenförmigen Widerlager ein stabiles rahmenförmiges Gebilde.

Eine stabile und kompakte Bauweise wird dadurch erhalten, daß der die Widerlager aufweisende Backen Teil eines Tragkörpers ist, der mit einer Anbauplatte für die Arbeitsmaschine versehen ist, und daß der das Spaltwerkzeug aufweisende Backen an dem Tragkörper schwenkbar gelagert ist. Mittels der Anbauplatte kann das Trenngerät problemlos und in entsprechender Positionierung am Stiel eines Baggers montiert werden.

In zweckmäßiger Ausbildung ist vorgesehen, daß an dem Tragkörper ein den Schwenkantrieb bildender Hydraulikzylinder abgestützt ist, der mit seinem anderen Ende an einem über das Schwenklager hinaus verlängerten Hebelarm des Backens mit dem Spaltwerkzeug angreift. Der Hydraulikzylinder wird an das Hydrauliksystem des Baggers in gleicher Weise angeschlossen, wie andere Werkzeuge, z.B. Schaufeln od.dgl.

Eine bevorzugte Ausführungsform der Erfindung zeichnet sich dadurch aus, daß der Tragkörper an der Anbauplatte an einer etwa senkrecht zur Achse des Schwenklagers der Backen verlaufenden Achse drehbar gelagert ist, und daß an der Anbauplatte ein auf den Tragkörper wirkender Drehantrieb angeordnet ist.

Mit dieser Ausbildung ist es möglich, das Trenngerät um seine eigene Längsachse zu drehen, um auf diese Weise das Trenngerät ohne Bewegung des Baggerstiels in eine bestmögliche Greif- und Arbeitsposition zu bringen.

Eine konstruktiv einfache und kompakte Bauweise ergibt sich dadurch, daß der Drehantrieb ein auf der Drehachse sitzender Hydromotor ist.

Nachstehend ist die Erfindung anhand eines in der Zeichnung gezeigten Ausführungsbeispiels beschrieben. In der Zeichnung zeigen:
Figur 1 eine Seitenansicht des Trenngerätes und
Figur 2 eine Ansicht II - II gemäß Figur.

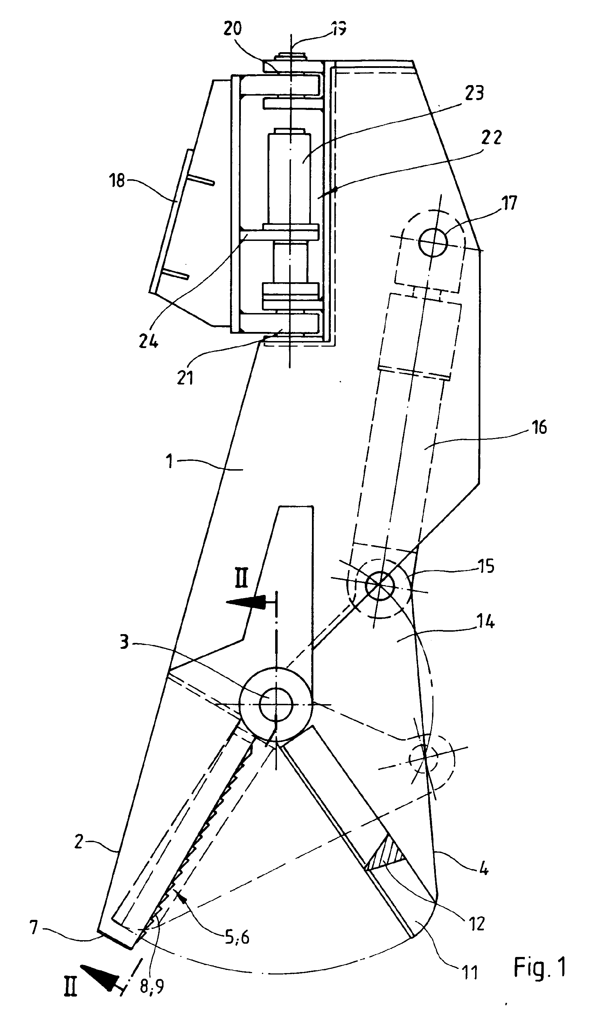

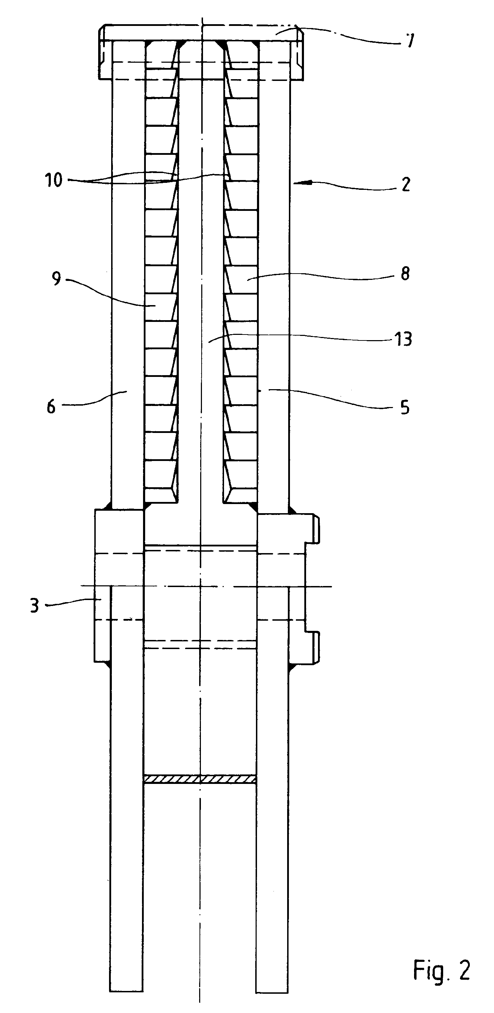

Das Trenngerät weist einen Tragkörper 1 auf, der an seinem einen Ende einen Backen 2 bildet und ein Schwenklager 3 für einen weiteren, jedoch beweglichen Backen 4 aufnimmt. Der Backen 2 am Tragkörper 1 weist an seiner dem anderen Backen 4 zugekehrten Seite zwei leistenförmige Widerlager 5,6 auf, die parallel und mit Abstand voneinander angeordnet sind (Figur 2). Die leistenförmigen Widerlager 5,6 sind an ihrem freien Ende über einen Quersteg 7 zu einem rahmenartigen Bauteil geschlossen. An ihrer Arbeitsfläche weisen die Widerlager 5,6 je ein Sägezahnprofil 8,9 auf, wobei die einzelnen Sägezähne, wie aus Figur 1 ersichtlich, mit ihrer steilen Flanke dem Schwenklager 3 zugekehrt sind. An den einander zugekehrten Seitenflanken sind die Sägezähne, wie Figur 2 zeigt, freigestellt, so daß auch dort ein Sägezahnprofil 10 erhalten wird.

Der andere Backen 4 weist ein keilförmiges Spaltwerkzeug 11 auf, dessen Querschnitt in Figur 1 bei 12 angedeutet ist. Länge und Breite des Spaltwerkzeugs sind so bemessen, daß es beim Trennvorgang bzw. nach dessen Abschluß in den Spalt 13 zwischen den leistenförmigen Widerlagern 5,6 und dem Quersteg 7 (Figur 2) eingreift bzw. diesen durchgreift.

Der Backen 4 weist einen über das Schwenklager 3 hinaus verlängerten Hebel 14 mit einem Lagerauge 15 auf, an dem die Kolbenstange eines Hydraulikzylinders 16 angreift. Dieser ist bei 17 am Tragkörper 1 gelenkig abgestützt. Zum Schutz desselben weist der Tragkörper 1 zwei parallele Stahlplatten auf, zwischen denen der Hydraulikzylinder 16 angeordnet ist. Mittels des an das Hydrauliksystem der Arbeitsmaschine angeschlossenen Hydraulikzylinders 16 kann der Backen 4 aus der in Figur 1 mit durchgezogenen Linien gezeigten Öffnungsstellung, in der er an dem zu trennenden Gut angreift, die Trennbewegung bis in die gestrichelt gezeigte Schließstellung durchführen.

Der Tragkörper 1 ist über eine Anbauplatte 18 an dem Stiel eines Baggers anbringbar, z.B. mittels nicht gezeigter Schrauben. Um das Verbringen des Trenngerätes in die günstigste Arbeitsposition zu erleichtern, ist zwischen Anbauplatte 18 und Tragkörper 1 eine Drehachse 19 mit Lagern 20,21 vorgesehen, die etwas senkrecht zur Achse des Schwenklagers 3 verläuft. In der Drehachse 19 ist ein Hydromotor 22 angeordnet, dessen Gehäuse 23 auf eine Sockelplatte 24 der Anbauplatte 18 befestigt ist und dessen Antriebswelle durch das Lager 21 unmittelbar auf den Tragkörper 1 wirkt. Das Trenngerät kann also um eine im wesentlichen senkrechte Achse um mehr als 180 Grad gedreht werden.

## Patentansprüche

1. Hydraulisch angetriebenes Trenngerät, das an eine Arbeitsmaschine mit Hochdruck-Hydrauliksystem, z.B. einen Bagger, anschließbar ist und zwei Backen (2,4) aufweist, von denen einer zwei mit Abstand und parallel nebeneinander angeordnete, leistenförmige Widerlager (5,6) für das aufzutrennende Gut und der andere ein Trennwerkzeug aufweist, das bei dem Trennvorgang bis zwischen die leitstenförmigen Widerlager (5,6) bewegbar ist, wobei die Widerlager (5,6) ein Profil (8,9) aufweisen, dadurch gekennzeichnet, daß das Profil an den Widerlagern (5,6) ein scharfkantiges, beim Trennvorgang in den zwischen dem Backen (2,4) eingeschlossenen Raum eindringendes Sägezahnprofil (8,9) ist, wobei die steile Flanke jedes Zahns dem Schwenklager (3) der Backen (2,4) zugekehrt ist, daß die leistenförmigen Widerlager (5,6) auch an den einander zugekehrten Seiten ein Sägezahnprofil (10) aufweisen, daß das Trennwerkzeug als keilförmiges Spaltwerkzeug (11) ausgebildet ist und daß die Backen (2,4) gegeneinander schwenkbar sind.

2. Trenngerät nach Anspruch 1, dadurch gekennzeichnet, daß die leistenförmigen Widerlager (5,6) an ihrem äußeren Ende durch einen Quersteg (7) verbunden sind und daß das Spaltwerkzeug (11) um etwa die Breite des Querstegs (7) kürzer ist als der die Widerlager aufweisende Backen (2).

3. Trenngerät nach Anspruch 1 oder 2, dadurch gekennzeichnet, daß der die Widerlager (5,6) aufweisende Backen (2) Teil eines Tragkörpers (1) ist, der mit einer Anbauplatte (18) für die Arbeitsmaschine versehen ist, und daß der das Spaltwerkzeug (11) aufweisende Backen (4) an dem Tragkörper (1) schwenkbar gelagert ist.

4. Trenngerät nach einem der Ansprüche 1 bis 3, dadurch gekennzeichnet, daß an dem Tragkörper (1) ein den Schwenkantrieb bildender Hydraulikzylindder (16) abgestützt ist, der mit seinem anderen ende an einem über das Schwenklager (3) hinaus verlängerten Hebelarm (14) des Backens (4) mit dem Spaltwerkzeug (11) angreift.

5. Trenngerät nach einem der Ansprüche 1 bis 4, dadurch gekennzeichnet, daß der Tragkörper (1) an der Anbauplatte (18) an einer etwa senkrecht zur Achse des Schwenklagers (3) der Backen (2,4) verlaufenden Achse (19) drehbar gelagert ist, und daß an der Anbauplatte (18) ein auf den Tragkörper (1) wirkender Drehantrieb (22) angeordnet ist.

## Claims

1. Hydraulically driven cutting implement, which is connectable to a working machine with a high pressure hydraulic system,, e.g. an excavator and has two jaws (2, 4), whereof one has two spaced strip-like abutments (5, 6) which are spaced and parallel juxtaposed for the material to be cut up and the other has a cutting tool, which during the cutting process is movable between the strip-like abutments (5, 6), which have a profile (8, 9), characterized in that the profile on the abutments (5, 6) is a sharp-edged sawtooth profile (8, 9) penetrating during the cutting process into the space enclosed between the jaws (2, 4), the steep flank of each tooth faces the swivel bearing (3) of the jaws (2, 4), that the strip-like abutments (5, 6) also have a sawtooth profile (10) on the facing sides, that the cutting tool is constructed as a wedge-like splitting tool (11) and that the jaws (2, 4) can be swivelled against one another.

2. Cutting implement according to claim 1, characterized in that the strip-like abutments (5, 6) are connected at their end by a crossbar (7) and that the splitting tool (11) is shorter by roughly the width of the crossbar (7) than the jaw (2) having the abutments.

3. Cutting implement according to claim 1 or 2, characterized in that the jaw (2) having the abutment (5, 6) is part of a support body (1), which is provided with a mounting plate (18) for the working machine and that the jaw (4) having the splitting tool (11) is mounted in swivellable manner on the support body (1).

4. Cutting implement according to one of the claims 1 to 3, characterized in that on the support body (1) is supported a hydraulic cylinder (16) forming the swivel drive and whose other end engages on a lever arm (14) of the jaw (4) with the splitting tool (11) extended beyond the swivel bearing (3).

5. Cutting implement according to one of the claims 1 to 4, characterized in that the support body (1) on the mounting plate (18) is mounted in rotary manner on a spindle (19) running roughly perpendicular to the axis of the swivel bearing (3) of the jaws (2, 4) and that a swivel drive (22) acting on the support body (1) is located on the mounting plate (18).

## Revendications

1. Dispositif de cisaillement à commande hydraulique pouvant être raccordé à un engin de terrassement équipé d'un système hydraulique à haute pression, par exemple à une excavatrice et comprenant deux mâchoires (2, 4) dont l'une est munie de deux butées (5, 6) en forme de baguettes pour la matière à cisailler disposées parallèlement à distance l'une à côté de l'autre et dont l'autre est équipée d'un outil à cisailler qui, lors du cisaillement, peut être déplacé jusqu'entre les butées (5, 6) en forme de baguettes, lesdites butées (5, 6) présentant un profil (8, 9), **caractérisé en ce** que le profil sur les butées (5, 6) est un profil en dents de scie (8, 9) avec des arêtes vives qui, lors du cisaillement, pénètre dans l'espace enfermé entre les mâchoires (2, 4), le flanc raide de chaque dent étant dirigé vers l'axe de pivotement (3) des mâchoires (2, 4); que les butées (5, 6) en forme de baguettes présentent également un profil en dents de scie (10) sur les faces dirigées l'une vers l'autre; que l'outil à cisailler est conformé en outil de fendage (11), et que les mâchoires (2, 4) peuvent être déplacées l'une vers l'autre.

2. Dispositif de cisaillement selon la revendication 1, caractérisé en ce que les butées (5, 6) en forme de baguettes sont réunies à leur extrémité extérieure par une barrette transversale (7), et que l'outil de fendage (11) est plus court d'environ la largeur de la barrette transversale (7) que la mâchoire (2) comportant les butées.

3. Dispositif de cisaillement selon l'une des revendications 1 ou 2, caractérisé en ce que la mâchoire (2) comportant les butées (5, 6) fait partie d'un corps de support (1) muni d'une plaque de montage (18) pour l'engin de terrassement, et que la mâchoire (4) comportant l'outil de fendage (11) est montée de manière pivotante sur le corps de support (1).

4. Dispositif de cisaillement selon l'une des revendications 1 à 3, caractérisé en ce que sur le corps de support (1) prend appui un vérin hydraulique (16) qui constitue l'entraînement pour le pivotement et dont l'autre extrémité agit sur un bras de levier (14) de la mâchoire (4) munie de l'outil de fendage (11), qui est prolongé au-delà de l'axe de pivotement (3).

5. Dispositif de cisaillement selon l'une des revendications 1 à 4, caractérisé en ce que sur la plaque de montage (18), le corps de support (1) est monté de manière tournante sur un axe (19) qui s'étend sensiblement perpendiculairement à l'axe de pivotement (3) des mâchoires (2, 4), et que sur la plaque de montage (18) est disposé un système d'entraînement en rotation (22) qui agit sur le corps de support (1).
